# EUROPEAN PATENT APPLICATION

(11) **EP 2 977 251 A1**
(43) Date of publication of application: **27.01.2016**
(21) Application number: 14768950.9
(22) Date of filing: 17.03.2014
(51) Int. Cl.: B60K 1/00, B60K 17/04, B60K 17/16

(54) **DRIVE DEVICE FOR ELECTRIC VEHICLE**

(30) Priority: 18.03.2013 JP 2013054545
(71) Applicant: Hitachi Automotive Systems, Ltd., Hitachinaka-shi, Ibaraki 312-8503 (JP)
(72) Inventor: YAMAMOTO, Tatsuyuki, Atsugi-shi Kanagawa 243-8510 (JP); TAKAHASHI, Akira, Atsugi-shi Kanagawa 243-8510 (JP)
(74) Representative: Hoefer & Partner Patentanwälte mbB
(86) International application number: PCT/JP2014/057054
(87) International publication number: WO 2014/148410

(57) **Abstract**

A motor power unit (9) is installed in a motor room (1). The motor power unit (9) is produced by integrally joining a motor (11) and a speed reduction gear unit (12) using, as a joining surface, one end surface of a motor case (11a) where a rotation shaft is provided, the speed reduction gear unit (12) including a speed reduction gear case (12a) in which a differential gear is installed together with a speed reduction gear. The motor (11) is placed above the differential gear installed in the speed reduction gear case (12a). The rotation shaft of the motor (11) is placed at the more front side of a vehicle body than a rotation center of the differential gear. With such arrangement, the length of the motor power unit (9) in a vehicle body longitudinal direction can be reduced.

## Description

### Technical Field

The present invention relates to a drive device as a power unit of an electric vehicle.

### Background Art

In electric vehicles of a front wheel drive type that employs an electric motor as a prime mover, there is a type in which, as is described in Patent Document-1, a motor power unit assembled by integrally joining a motor and a speed reduction gear unit is arranged in a motor room that corresponds to an engine room of a gasoline engine vehicle. Since, in the speed reduction gear unit, a differential gear is installed as a final gear that distributes a rotation force of the motor to right and left drive road wheels while reducing the rotation speed, the motor power unit is so set in the motor room that the motor and the speed reduction gear unit are arranged abreast in a vehicle body width direction causing a rotation center of the differential gear to be directed to the vehicle body width direction. In the motor room, an inverter and a converter are also set together with the motor power unit.

However, the known motor power unit described in Patent Document-1 is large in size particularly in size in the vehicle body longitudinal direction, and thus, mounting the unit into the motor room requires a larger occupying space thereby not only lowering the space efficiency of the motor room but also restricting the layout for the other mounted devices.

### Prior Art Document

### Patent Document

Patent Document-1 : Japanese Laid-open Patent Application (tokkai) 2011-20624

### Summary of Invention

The present invention is provided by taking the above-mentioned problem into consideration and aims to provide a drive device in which the length of the motor power unit in the vehicle body longitudinal direction is reduced for increasing the space efficiency of the motor room and suppressing the restriction of the layout for the other mounted devices.

In accordance with the present invention, there is provided, in an electric vehicle including a generator-motor that drives road wheels to rotate the same and generates electricity by receiving rotation of the road wheels and a differential gear that distributes a rotation force of the generator-motor to left and right road wheels, an arrangement in which when the power motor unit is mounted on the vehicle, the generator-motor takes a position above the differential gear.

In accordance with the present invention, since the generator-motor is placed above the differential gear, the length of the motor power unit in the vehicle body longitudinal direction is reduced. Thus, the occupying space for the unit in the motor room is reduced and thus the space efficiency is increased and the restriction of the layout for the other mounted devices in the motor room is suppressed.

### Brief description of Drawings

Fig. 1 is a view of a first embodiment of a drive device for an electric vehicle according to the present invention, which is a schematically illustrated explanation drawing of a motor room;
Fig. 2 is a plan view of Fig. 1;
Fig. 3 is a side view of Fig. 1;
Fig. 4 is a front view of Fig. 1;
Fig. 5 is an internal construction view of a speed reduction gear unit employed in a motor power unit shown in Fig. 1;
Fig. 6 is a view of a second embodiment of the drive device for the electric vehicle according to the present invention, which is a plan view like Fig. 2; and
Fig. 7 is a side view of Fig. 6.

### Embodiments of the Invention

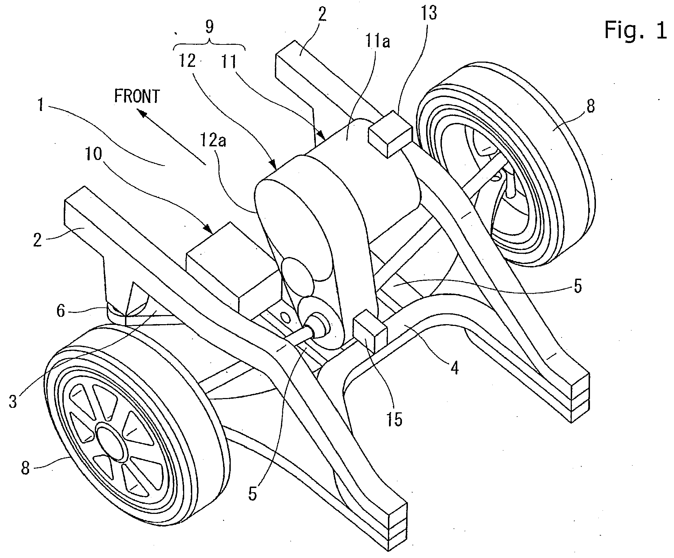

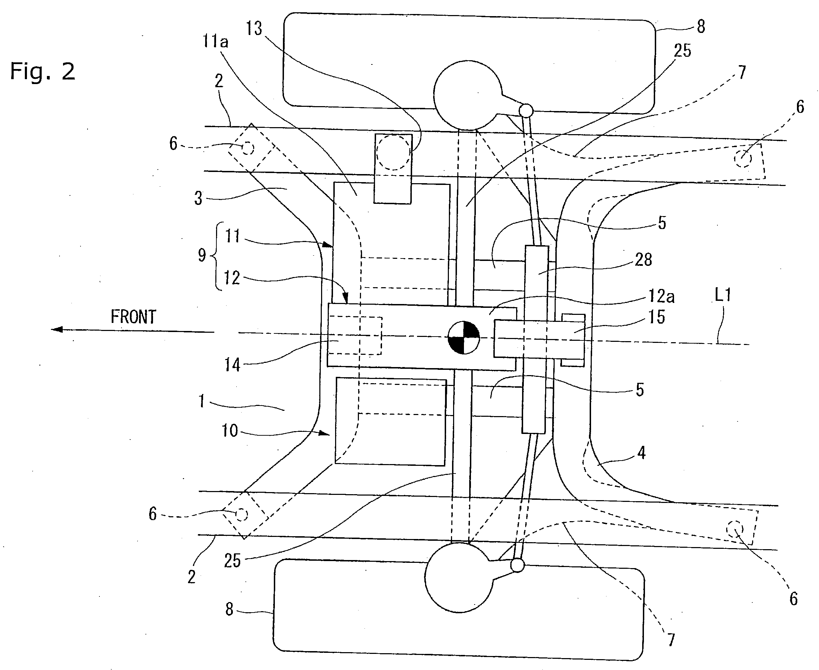

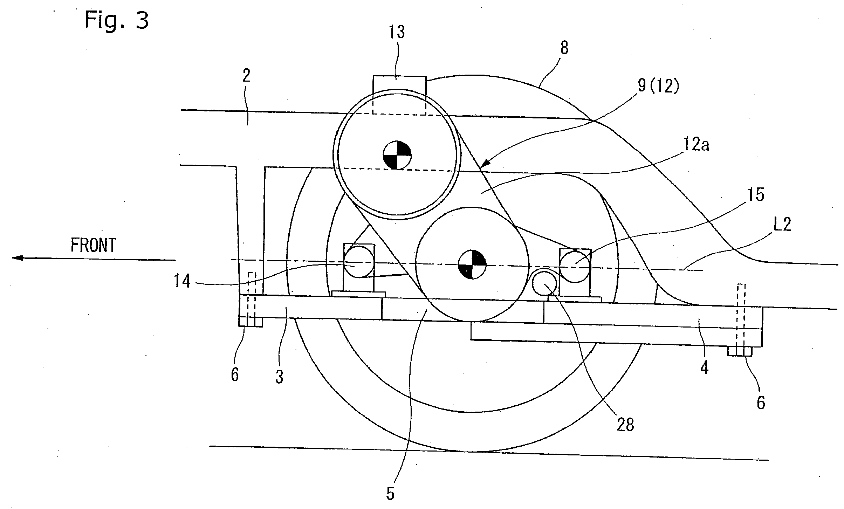

Figs. 1 to 5 are views showing a first embodiment (viz., concrete embodiment) of a drive device for an electric vehicle, according to the present invention, in which Fig. 1 schematically shows a layout of a power motor unit used as the drive device in a motor room of the electric vehicle of the front wheel drive type, Fig. 2 is a plan view of Fig. 1, Fig. 2 is a side view of Fig. 1, and Fig. 3 is a front view taken from a front position of Fig. 1.

As is shown in Figs. 1 and 2 to 4, within a motor room 1 provided at a front portion of a vehicle body, there are arranged paired left and right side members 2 which extend in parallel with each other toward a front position of the vehicle body to serve as skeleton reinforcing members of the motor room 1, and as is seen from Fig. 2, below the paired left and right side members 2, there are arranged a pair of suspension members 3 and 4 which are provided at front and rear positions respectively. These paired front and rear suspension members 3 and 4 are connected through a pair of reinforcing members 5 that extend in a vehicle body longitudinal direction like cross-linked members, and the front and rear suspension members are connected to and supported by the left and right side members 5 through for example four insulators 6. The suspension member 4 has left and right portions to which respective transverse links 7 are connected, and by the transverse links 7, there are supported left and right road wheels (front road wheels) 8 through axle shafts (not shown).

Onto the paired front and rear suspension members 3 and 4, there are mounted a motor power unit 9 and an inverter 10 that controls driving of the motor power unit 9. As will be described hereinafter, the motor power unit 9 is constructed to have both a motor or prime mover as a generator-motor (for example, a three-phase synchronous motor of a type that has permanent magnets embedded and serves as a generator during regeneration) 11 and a speed reduction gear unit 12 including a final drive unit (viz., final drive gear). Upon mounting, an integral unit including the motor and speed reduction gear unit is mounted on the paired front and rear suspension members 3 and 4 in such a manner that the motor and the speed reduction gear unit are arranged in a vehicle body width direction, the integral unit being produced by integrally joining respective cases, which are a motor case 11a and a speed reduction gear case 12a, of the motor and speed reduction gear unit.

An upper portion of the motor case 11a is fixed through an antivibration mount 13 as a first mount portion to an upper surface of one of the side members 2 as a first fixing position of a vehicle body side. Furthermore, a front portion of the speed reduction gear case 11a is fixed through an antivibration mount 14 as a second mount portion to an upper surface of the front suspension member 3 as a second fixing position of the vehicle body side, and a rear portion of the speed reduction gear case 12a is fixed through an antivibration mount 15 as a third mount portion to an upper surface of the rear suspension member 4 as a third fixing position of the vehicle body side. As is seen from Figs. 1, 3 and 4, the fixing position determined by the antivibration mount 14 as the second mount portion and the fixing position determined by the antivibration mount 15 as the third mount portion are positioned below the fixing position determined by the antivibration mount 13 as the first mount portion.

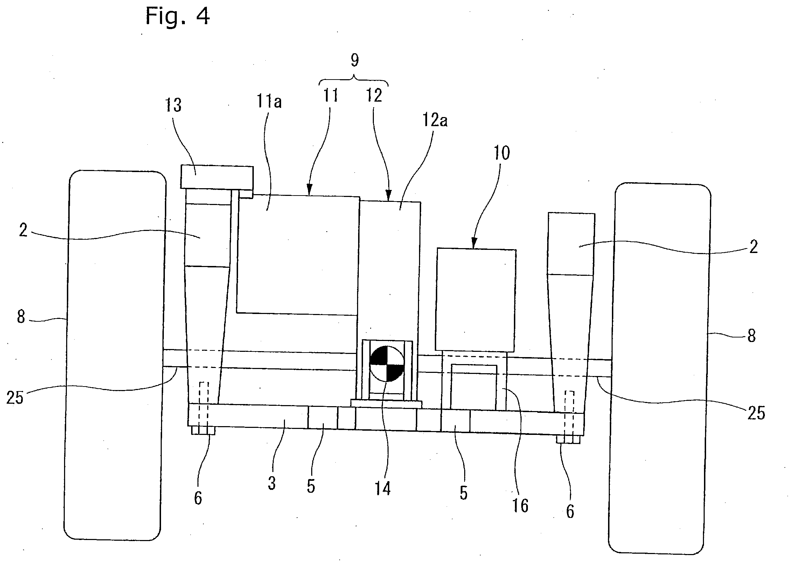

As is seen from Fig. 4, the inverter 10 is supported through a stay 16 by the front suspension member 3 and the reinforcing member 5 while straddling the members 3 and 5.

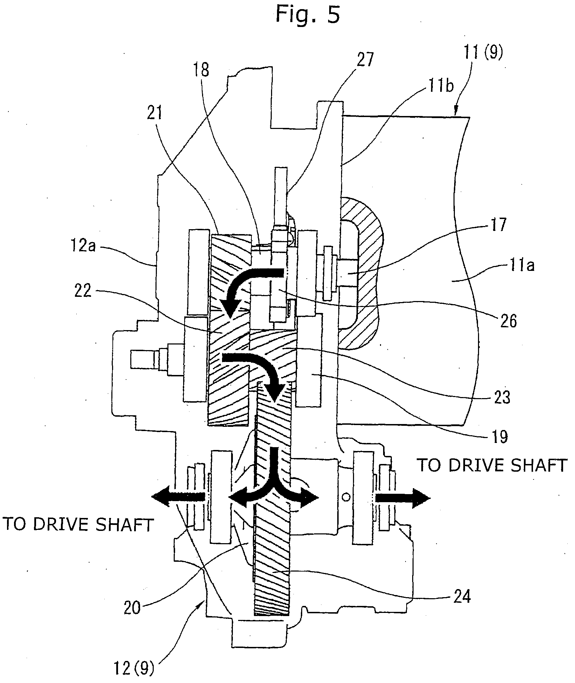

Fig. 5 shows an internal construction of an essential part of the motor power unit 9. As shown, the motor 11 has a generally cylindrical motor case 11a, and the motor case has, at a side where a rotation shaft 17 of the motor extends, an end surface 11b that is to be mated with the speed reduction gear unit 12. While, the speed reduction gear unit 12 is so postured that an input shaft 18, an intermediate shaft 19 and a differential case 20 are arranged in the speed reduction gear case 12a in order in a downward direction. Into the input shaft 18, there is directly inputted a rotation force of the rotation shaft 17 of the motor 11, and on the input shaft 17, there is mounted a speed reduction gear 21. Thus, the motor case 12a and the speed reduction gear case 13a are integrally joined using the end surface of the of the motor case 11a where the rotation shaft 17 extends as a contact surface so that the rotation shaft 17 of the motor 11 and the input shaft 18 of the speed reduction gear unit 12 are to be aligned. With such arrangement, the motor power unit 9 is produced.

Onto the intermediate shaft 19 in the speed reduction gear case 12a, there is mounted a speed reduction gear 22 meshed with a speed reduction gear 21 mounted on the input shaft 18. In addition to the gear 22, another speed reduction gear 23 is mounted on the intermediate shaft 19. On a peripheral portion of the differential case 20, there is integrally mounted a differential gear 24 as a final gear, and the differential gear 24 is meshed with the speed reduction gear 23 on the intermediate shaft 19. Furthermore, within the differential case 20, there are installed a pair of side gears (not shown) and a pair of pinion mate gears (not shown) meshed with the paired side gears, and rotation output of the side gears produces the rotation output of the speed reduction gear unit 12. That is, within the speed reduction gear case 12a of the speed reduction gear unit 12, there are installed the differential case 20 and the differential gear 24 together with the plurality of speed reduction gears 21, 22 and 23 as speed reduction elements, and as is seen from Figs. 2 and 3, to the side gears installed in the differential case 20, there are connected drive shafts 25 for driving the left and right drive road wheels 8.

In Fig. 1, the drive shafts 25 are not shown for avoiding complication of the drawing. Denoted by numeral 26 is a parking lock gear that is coaxial with the speed reduction gear 21, and the parking lock gear 26 and a lock tooth 27 engageable with the parking lock gear 26 constitute a parking lock mechanism.

As is seen from Figs. 2 and 3, behind the drive shafts 25, there is arranged a steering linkage 28 of the power steering device. The steering linkage 28 extends in a vehicle body width direction below the antivibration mount 15 as the third mount portion, and thus, interference with the antivibration mount 15 is avoided.

When the motor power unit 9 is mounted on the vehicle body in the above-mentioned manner, the posture of the unit 9 is so made that an upper portion of the speed reduction gear case 12a that contains the motor 11 placed at a lower part of the speed reduction gear case 12a takes a position at a front side of the vehicle body causing the motor power unit 9 to incline forward. With this inclined arrangement, the rotation shaft 17 of the motor 11 is positioned above the rotation center of the differential gear 24 in the speed reduction gear case 12a and at the same time, the rotation shaft 17 of the motor 11 is positioned at the more front side of the vehicle body than the rotation center of the differential gear 24.

Furthermore, as is seen from Figs. 2 to 4, the motor power unit 9 including the motor 11 and the speed reduction gear unit 12 is arranged within a diameter of the road wheel 8 as is understood from the plan view, side view and front view of the vehicle body.

Furthermore, as is seen from Figs. 1, 2 and 4, the speed reduction gear unit 12 including the differential gear 24 in the motor power unit 9 is placed on a center line L1 together with the antivibration mount 14 as the second mount portion and the antivibration mount 15 as the third mount portion, the center line L1 being a line through which the vehicle width (tread) is bisected.

As a result, as is seen from the drawings, when the position of the speed reduction gear unit 12 including the differential gear 24 in the motor power unit 9 is considered as a reference position, the motor 11 and inverter 10 are arranged to put therebetween the speed reduction gear unit 12 placing the motor 11 at one vehicle body width side and the inverter 10 at the other vehicle body width side. The left and right drive shafts 25 each extending from the differential case 20 to the road wheel 8 have generally the same length.

As is seen from Fig. 3, centers of the antivibration mounts 14 and 15 as the second and third mount portions of the motor power unit 9 are placed on a horizontal axis line L2 that extends through the rotation center of the differential gear 24.

Accordingly, in the embodiment, since, in the construction of the motor power unit 9 in which the motor 11 and the speed reduction gear unit 12 are integrally joined to each other, the motor 11 is placed above the differential gear 24 in the speed reduction gear case 12a, the length of the motor power unit 9 in the vehicle body longitudinal direction is reduced and thus mounting of the unit 9 into the motor room 1 brings about a spacial advantage.

Furthermore, as has been mentioned hereinabove, when the position of the speed reduction gear unit 12 including the differential gear 24 in the motor power unit 9 is considered as a reference position, the motor 11 and inverter 10 are arranged to put therebetween the speed reduction gear unit 12 placing the motor 11 at one vehicle body lateral side and the inverter 10 at the other vehicle body lateral side, and thus, the spacial advantage is obtained by such arrangement. Furthermore, weight-balanced arrangement in the left and right is established, which is another advantage.

Furthermore, since the rotation shaft 17 of the motor 11 is placed at the more front side of the vehicle body than the rotation center of the differential gear 24 in the speed reduction gear case 12a, rash of the motor 11 into the vehicle cabin, which would occur in a vehicle collision, is suppressed. This is an advantageous safety measure against vehicle collisions.

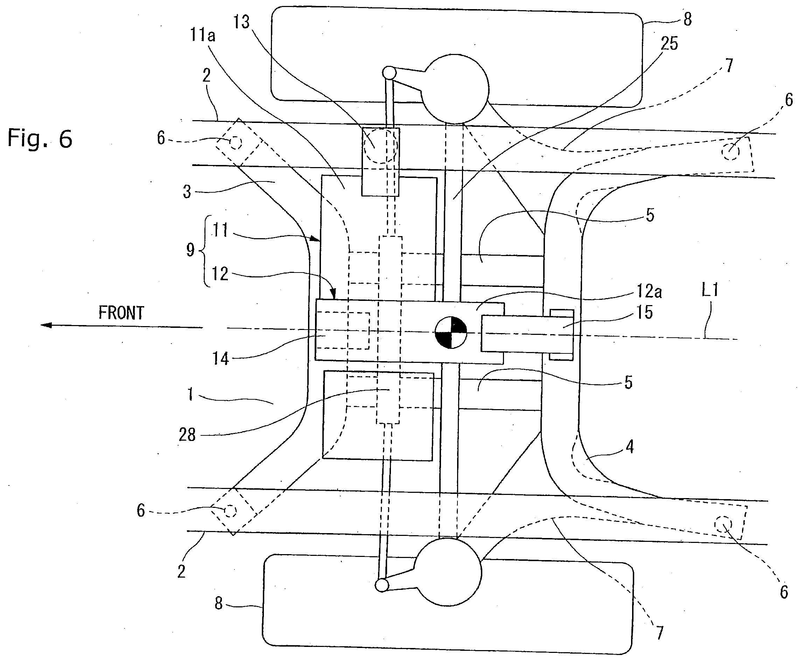

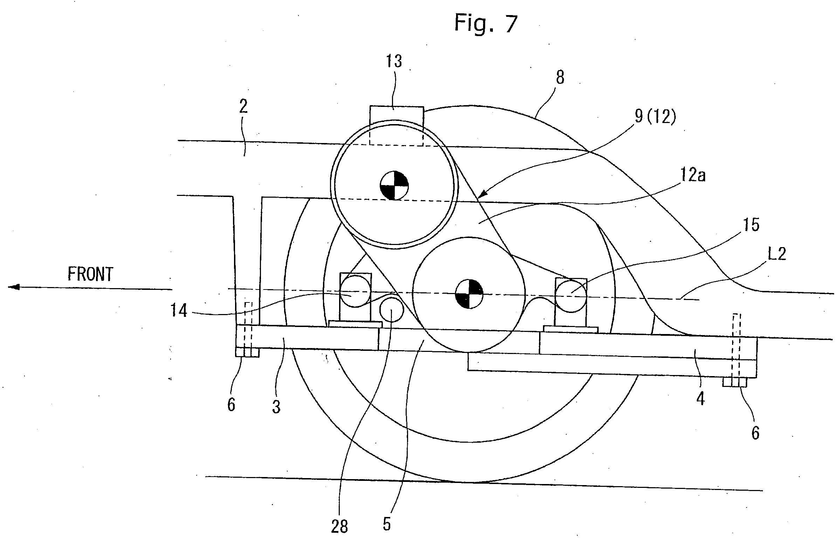

Figs. 6 and 7 show a second embodiment of the present invention, in which parts and portions that are the same as those of Figs. 2 and 3 are denoted by the same numerals. As will be clearly understood when comparing Figs. 6 and 7 with Figs. 2 and 3, in the second embodiment shown by Figs. 6 and 7, the steering linkage 28 is placed at the more front side than the drive shaft 25, which is only one difference. Also in this case, since the steering linkage 28 is arranged to extend under the antivibration mount 14 as the second mount portion in the vehicle body width direction, interference with the antivibration mount 14 is avoided.

Also in this second embodiment, substantial same effects as those of the first embodiment are obtained.

## Claims

1. A drive device for an electric vehicle, comprising:
a generator-motor that drives left and right road wheels to rotate the same and generates electricity by receiving rotation of the road wheels; and
a differential gear that distributes a rotation force of the generator-motor to the left and right road wheels,
wherein when the drive device is mounted on the vehicle, the generator-motor takes a position above the differential gear.

2. A drive device for an electric vehicle as claimed in Claim 1, in which:
an inverter is provided for operating the generator-motor, and
when the vehicle is shown in a plan view, the generator-motor and the inverter are arranged to put therebetween the differential gear placing the generator-motor at one vehicle body lateral side and the inverter at the other vehicle body lateral side.

3. A drive device for an electric vehicle as claimed in Claim 2, in which:
when the vehicle is shown in a plan view, the differential gear is placed at a generally middle position of a width of the vehicle body, and the generator-motor and the inverter are placed at both sides of the differential gear.

4. A drive device for an electric vehicle as claimed in Claim 1, in which:
the differential gear is installed in a speed reduction gear case together with speed reduction elements thereby to constitute a speed reduction gear unit, and
the speed reduction gear unit and the generator-motor are integrally joined to each other.

5. A drive device for an electric vehicle as claimed in Claim 1, in which:
when the vehicle is shown in a plan view, the generator-motor and the differential gear are arranged to be received within a diameter of each road wheel.

6. A drive device for an electric vehicle as claimed in Claim 5, in which:
the generator-motor is so arranged that a rotation shaft of the generator-motor is placed at the more front side of the vehicle body than a rotation center of the differential gear.

7. A drive device for an electric vehicle as claimed in Claim 1, in which:
the differential gear is installed in a speed reduction gear case together with speed reduction elements thereby to constitute a speed reduction gear unit;
the speed reduction gear unit and the generator-motor are integrally joined to each other; and
a first mount portion is provided through which the generator-motor is fixed to a first fixing position of the vehicle body; and
a second mount portion is provided through which the speed reduction gear unit is fixed to a second fixing position of the vehicle body.

8. A drive device for an electric vehicle as claimed in Claim 7, in which:
a third mount portion is provided through which the speed reduction gear unit is fixed to a third fixing position of the vehicle body.

9. A drive device for an electric vehicle as claimed in Claim 8, in which:
the second and third fixing positions in the first to third fixing positions defined by the corresponding mount portions are set at positions that are below the first fixing position.

10. A drive device for an electric vehicle, comprising:
a generator-motor that drives left and right road wheels to rotate the same and generates electricity by receiving rotation of the road wheels;
a differential gear that distributes a rotation force of the generator-motor to the left and right road wheels; and
a speed reduction gear unit that includes a speed reduction gear case in which the differential gear is installed together with speed reduction elements,
wherein the generator-motor and the differential gear are integrally joined to each other in such a manner that when the drive device is mounted on the vehicle, the generator-motor is placed above the differential gear.

11. A drive device for an electric vehicle as claimed in Claim 10, in which:
a first mount portion is provided through which the generator-motor is fixed to a first fixing position of the vehicle body; and
a second mount portion is provided through which the speed reduction gear unit is fixed to a second fixing position of the vehicle body.

12. A drive device for an electric vehicle as claimed in Claim 11, in which:
a third mount portion is provided through which the speed reduction gear unit is fixed to a third fixing position of the vehicle body.

13. A drive device for an electric vehicle as claimed in Claim 12, in which:
the second and third fixing positions in the first to third fixing positions defined by the corresponding mount portions are set at positions that are below the first fixing position.

14. A drive device for an electric vehicle as claimed in Claim 11, in which:
when the vehicle is shown in a plan view, the generator-motor and the differential gear are arranged to be received within a diameter of each road wheel.

15. A drive device for an electric vehicle as claimed in Claim 14, in which:
the generator-motor is so arranged that a rotation shaft of the generator-motor is placed at the more front side of the vehicle body than a rotation center of the differential gear.

16. A drive device for an electric vehicle as claimed in Claim 10, in which:
an inverter is provided for operating the generator-motor, and
when the vehicle is shown in a plan view, the differential gear is arranged at a generally middle of a width of the vehicle body and the generator-motor and the inverter are arranged to put therebetween the differential gear placing the generator-motor at one vehicle body lateral side and the inverter at the other vehicle body lateral side.

17. A drive device for an electric vehicle, comprising:
a generator-motor that drives left and right road wheels to rotate the same and generates electricity by receiving rotation of the road wheels;
a differential gear that distributes a rotation force of the generator-motor to the left and right road wheels;
an inverter for operating the generator-motor; and
a speed reduction gear unit including a speed reduction gear case in which the differential gear is installed together with speed reduction elements, the speed reduction gear unit being so oriented that a rotation center of the differential gear is directed to a vehicle body width direction,
wherein the generator-motor and the inverter are arranged to put therebetween the speed reduction gear unit placing the generator-motor at one vehicle body lateral side and the inverter at the other vehicle body lateral side, and the generator-motor and the speed reduction gear unit are integrally joined to each other in such a manner that when the drive device is mounted on the vehicle, the generator-motor is placed above the differential gear.

18. A drive device for an electric vehicle as claimed in Claim 17, in which:
the generator-motor is so arranged that a rotation shaft of the generator-motor is placed at the more front side of the vehicle body that a rotation center of the differential gear.

19. A drive device for an electric vehicle as claimed in Claim 18, in which:
a first mount portion is provided through which the generator-motor is fixed to a first fixing position of the vehicle body;
a second mount portion is provided through which the speed reduction gear unit is fixed to a second fixing position of the vehicle body; and
a third mount portion is provided through when the speed reduction gear unit is fixed to a third fixing position of the vehicle body.

20. A drive device for an electric vehicle as claimed in Claim 19, in which:
when the vehicle is shown in a plan view, the generator-motor and the speed reduction gear unit are arranged to be received within a diameter of each road wheel.

## Amended claims

### Amended claims under Art. 19.1 PCT

**1.** (amended):
A drive device for an electric vehicle, comprising:
a generator-motor that drives left and right road wheels to rotate the same and generates electricity by receiving rotation of the road wheels; and
a speed reduction gear unit including a speed reduction gear case in which a differential gear is installed together with speed reduction elements, the differential gear functioning to distribute a rotation force of the generator-motor to the left and right road wheels;
a plurality of mount portions through which the generator-motor and the speed reduction gear unit are fixed to a vehicle body; and
a steering linkage connected to the road wheels,
wherein when the drive device is mounted on the vehicle, the generator-motor takes a position above the differential gear;
wherein the generator-motor and the speed reduction gear unit are integrally joined to each other; and
wherein the steering linkage is arranged to extend between either one of the mount portions and the speed reduction gear unit.
2. A drive device for an electric vehicle as claimed in Claim 1, in which:
an inverter is provided for operating the generator-motor, and
when the vehicle is shown in a plan view, the generator- motor and the inverter are arranged to put therebetween the differential gear placing the generator-motor at one vehicle body lateral side and the inverter at the other vehicle body lateral side.
3. A drive device for an electric vehicle as claimed in Claim 2, in which:
when the vehicle is shown in a plan view, the differential gear is placed at a generally middle position of a width of the vehicle body, and the generator-motor and the inverter are placed at both sides of the differential gear.
4.(deleted)
5. A drive device for an electric vehicle as claimed in Claim 1, in which:
when the vehicle is shown in a plan view, the generator-motor and the differential gear are arranged to be received within a diameter of each road wheel.
6. A drive device for an electric vehicle as claimed in Claim 5, in which:
the generator-motor is so arranged that a rotation shaft of the generator-motor is placed at the more front side of the vehicle body than a rotation center of the differential gear.
7. ((amended):
A drive device for an electric vehicle as claimed in Claim 1, in which:
the mount portions comprise:
a first mount portion through which the generator-motor is fixed to a first fixing position of the vehicle body; and
a second mount portion through which the speed reduction gear unit is fixed to a second fixing position of the vehicle body.
8. ((amended):
A drive device for an electric vehicle as claimed in Claim 7, in which:
the mount portions further comprise:
a third mount portion through which the speed reduction gear unit is fixed to a third fixing position of the vehicle body.
9. A drive device for an electric vehicle as claimed in Claim 8, in which:
the second and third fixing positions in the first to third fixing positions defined by the corresponding mount portions are set at positions that are below the first fixing position.
10. ((amended):
A drive device for an electric vehicle, comprising:
a generator-motor that drives left and right road wheels to rotate the same and generates electricity by receiving rotation of the road wheels;
a speed reduction gear unit including a speed reduction gear case in which a differential gear is installed together with speed reduction elements, the differential gear functioning to distribute a rotation force of the generator-motor to the left and right road wheels;
a plurality of mount portions through which the generator-motor and the speed reduction gear unit are fixed to a vehicle body; and
a steering linkage connected to the road wheels,
wherein the generator-motor and the speed reduction gear unit are integrally joined to each other in such a manner that when the drive device is mounted on the vehicle, the generator-motor is placed above the differential gear, and
wherein the steering linkage is arranged to extend between either one of the mount portions and the speed reduction gear unit.
11. ((amended):
A drive device for an electric vehicle as claimed in Claim 10, in which:
the mount portions comprise:
a first mount portion through which the generator-motor is fixed to a first fixing position of the vehicle body; and
a second mount portion through which the speed reduction gear unit is fixed to a second fixing position of the vehicle body.
12. ((amended):
A drive device for an electric vehicle as claimed in Claim 11, in which:
the mount portions further comprise:
a third mount portion through which the speed reduction gear unit is fixed to a third fixing position of the vehicle body.
13. A drive device for an electric vehicle as claimed in Claim 12, in which:
the second and third fixing positions in the first to third fixing positions defined by the corresponding mount portions are set at positions that are below the first fixing position.
14. A drive device for an electric vehicle as claimed in Claim 11, in which:
when the vehicle is shown in a plan view, the generator-motor and the differential gear are arranged to be received within a diameter of each road wheel.
15. A drive device for an electric vehicle as claimed in Claim 14, in which:
the generator-motor is so arranged that a rotation shaft of the generator-motor is placed at the more front side of the vehicle body than a rotation center of the differential gear.
16. A drive device for an electric vehicle as claimed in Claim 10, in which:
an inverter is provided for operating the generator-motor, and
when the vehicle is shown in a plan view, the differential gear is arranged at a generally middle of a width of the vehicle body and the generator-motor and the inverter are arranged to put therebetween the differential gear placing the generator-motor at one vehicle body lateral side and the inverter at the other vehicle body lateral side.
17. ((amended):
A drive device for an electric vehicle, comprising:
a generator-motor that drives left and right road wheels to rotate the same and generates electricity by receiving rotation of the road wheels;
a speed reduction gear unit including a speed reduction gear case in which a differential gear is installed together with speed reduction elements, the speed reduction gear unit being so oriented that a rotation center of the differential gear is directed to a vehicle body lateral direction, the differential gear functioning to distribute a rotation force of the generator-motor to the left and right road wheels;
an inverter for operating the generator-motor;
a plurality of mount portions through which the generator-motor and the speed reduction gear unit are fixed to the vehicle body; and
a steering linkage connected to the road wheels,
wherein the generator-motor and the inverter are arranged to put therebetween the speed reduction gear unit placing the generator-motor at one vehicle body lateral side and the inverter at the other vehicle body lateral side, and the generator-motor and the speed reduction gear unit are integrally joined to each other in such a manner that when the drive device is mounted on the vehicle, the generator-motor is placed above the differential gear.
18. A drive device for an electric vehicle as claimed in Claim 17, in which:
the generator-motor is so arranged that a rotation shaft of the generator-motor is placed at the more front side of the vehicle body that a rotation center of the differential gear.
19. ((amended):
A drive device for an electric vehicle as claimed in Claim 18, in which:
the mount portions comprise:
a first mount portion through which the generator-motor is fixed to a first fixing position of the vehicle body; and
a second mount portion through which the speed reduction gear unit is fixed to a second fixing position of the vehicle body; and
a third mount portion through when the speed reduction gear unit is fixed to a third fixing position of the vehicle body.
20. A drive device for an electric vehicle as claimed in Claim 19, in which:
when the vehicle is shown in a plan view, the generator-motor and the speed reduction gear unit are arranged to be received within a diameter of each road wheel.

Statement under Art. 19.1 PCT
1. Claim 1 is amended by incorporating the limitation of original Claim 4 and amended based on the description of paragraphs 0012 and 0017 of the specification as originally filed.

2. Claim 7 is amended based on the description of Paragraphs 0012 and 0017 of the specification as originally filed.

3. Claim 8 is amended based on the description of paragraphs 0012 and 0017 of the specification as originally filed.

4. Claim 10 is amended based on the description of paragraphs 0012 and 0017 of the specification as originally filed.

5. Claim 11 is amended based on the description of paragraphs 0012 and 0017 of the specification as originally filed.

6. Claim 12 is amended based on the description of paragraphs 0012 and 0017 of the specification as originally filed.

7. Claim 17 is amended based on the description of paragraphs 0012 and 0017 of the specification as originally filed.

8. Claim 19 is amended based on the description of paragraphs 0012 and 0017 of the specification as originally filed.
